(19) Europäisches Patentamt
European Patent Office
Office européen des brevets

(11) **EP 4 245 826 A1**

(12) **EUROPÄISCHE PATENTANMELDUNG**

(43) Veröffentlichungstag:
**20.09.2023 Patentblatt 2023/38**

(21) Anmeldenummer: **23161160.9**

(22) Anmeldetag: **10.03.2023**

(51) Internationale Patentklassifikation (IPC):
**C09K 11/77** (2006.01)    **C01F 17/32** (2020.01)

(52) Gemeinsame Patentklassifikation (CPC):
**C09K 11/77062; C01F 17/32; C09K 11/77742**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **17.03.2022 EP 22162614**

(71) Anmelder: **Evonik Operations GmbH**
**45128 Essen (DE)**

(72) Erfinder:
• **Schulte, Simone**
**45133 Essen (DE)**

• **Huth, Michael**
**63477 Maintal (DE)**
• **Fischer, Stefan**
**59494 Soest (DE)**
• **Janke, Christina**
**45327 Essen (DE)**
• **Tschernjaew, Juri**
**63743 Aschaffenburg (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **VERFAHREN ZUR HERSTELLUNG VON UP-CONVERSION LEUCHTSTOFFEN**

(57) Die Erfindung betrifft ein Verfahren zur Herstellung eines Up-Conversion Leuchtstoffes der allgemeinen Formel (I)

$$A_{1-x-y-z}B^*_y B_2 SiO_4 : Ln^1_x, Ln^2_z, \qquad I$$

umfassend folgende Schritte:
- Herstellung einer Mischung,
- Einbringung der Mischung in einem Reaktionsraum einer thermischen Vorrichtung,
- Aufheizung der Mischung bis zur Erreichung einer thermischen Behandlungstemperatur mit einer Aufheizrampe,
- Thermische Behandlung der aufgeheizten Mischung, wobei die Verweilzeit mindestens 0,02 h beträgt,
- Abkühlung des thermisch behandelten Materials bis Raumtemperatur unter Einhaltung einer Abkühlrampe,
- Erhalt eines silikatbasierten Lanthanoid-Ion dotierten Leuchtstoffes gemäß Formel (I).

EP 4 245 826 A1

**Beschreibung**

Die Erfindung betrifft ein Verfahren zur Herstellung von Up-Conversion Leuchtstoffen.

Tagtäglich sind Menschen Millionen von Mikroorganismen wie Bakterien, Pilzen und Viren ausgesetzt. Viele dieser Mikroorganismen sind nützlich bzw. sogar notwendig. Dennoch gibt es neben den harmloseren Vertretern auch krankheitsverursachende oder sogar tödliche Bakterien, Pilze und Viren.

Durch den täglichen Umgang mit anderen Menschen und den Kontakt mit Gegenständen, die andere benutzt haben, können Mikroorganismen übertragen werden. Die antimikrobielle Ausstattung von Oberflächen erfolgt insbesondere in hygienesensiblen Bereichen. Anwendungsbereiche sind vor allem Oberflächen von medizintechnischen Geräten und Bedarfsgegenstände in Krankenhäusern sowie in Einrichtungen des ambulanten Gesundheits- und Sozialwesens. Hinzu kommen Oberflächen im öffentlichen Raum, im Lebensmittelsektor und in der Tierhaltung. Die Verbreitung von pathogenen Mikroorganismen stellt heute ein großes Problem im Pflegebereich und in der Medizin dar, und auch überall dort, wo viele Menschen auf engem Raum verkehren. Ein besonders Risiko stellt gegenwärtig auch das vermehrte Aufkommen sogenannter multiresistenter Keime dar, die unempfindlich gegen übliche Antibiotika geworden sind.

Um das Risiko der Verbreitung von pathogenen Erregern über Berührungsoberflächen zu verringern, werden, neben Maßnahmen zur Standardhygiene, antimikrobielle Technologien und Werkstoffe genutzt. Chemische Substanzen oder die Verwendung physikalischer Verfahren können den Vermehrungsprozess von Mikroorganismen kritisch beeinflussen. Zu den physikalischen Methoden zählen z. B. Hitze, Kälte, Strahlung oder Ultraschall, etc. Bei den chemischen Methoden sind Halogene, Metallionen, organische Verbindungen und Farbstoffe, giftige Gase, etc. bekannt.

Obwohl in den meisten Fällen chemische und physikalische Methoden außerordentlich effektiv bei der Zerstörung von Mikroorganismen sind, so haben sie doch nur einen kurzzeitigen Effekt, chemische Methoden fördern die Entstehung von Resistenzen und sind unter Umständen für manche Anwendungen nicht geeignet, da sie zur Zerstörung der zu schützenden Oberflächen führen. Den größten Nachteil stellt allerdings, gerade bei chemischen, organischen Substanzen, die Gefährlichkeit bzw. Giftigkeit für den Menschen dar. Bestimmte Substanzen, wie z. B. Formaldehyd, welches viele Jahre als Desinfektionsmittel Anwendung fand, stehen inzwischen im Verdacht, Krebs zu verursachen oder extrem umweltschädlich zu sein.

Oberflächen mit antimikrobieller Wirkung könnten einen entscheidenden Beitrag zur Lösung dieser Probleme leisten. Die heute gängigen Verfahren zur Erzeugung solcher antimikrobiellen Eigenschaften verwenden überwiegend in das Material eingearbeitete Wirkstoffe wie z.B. Silberpartikel, Kupferpartikel, deren Metalloxide oder quaternäre Ammoniumverbindungen. Dabei werden die antimikrobiell wirkenden Metalle, Metalloxide oder Metalloxidgemische häufig zu Nanoteilchen verarbeitet und dann Farben, Lacken oder Polymerwerkstoffen zugemischt. Der breite Einsatz von Metallpartikeln ist in Frage zu stellen, da die langfristige Wirkung dieses Schwermetalls auf Menschen und Umwelt kaum abzuschätzen ist.

Beispielsweise offenbart die WO 2019/197076 Partikel, die mit einer Schicht ausgestattet sind, die sowohl Antimon-Zinnoxid als auch Manganoxid enthält. Dem Fachmann ist bekannt, dass die antimikrobiellen Oberflächen aufgrund des elektrochemischen Verhaltens von Metallen erzeugt werden, die bei Anwesenheit von Feuchtigkeit mikrogalvanische Zellen und durch die mikroelektrischen Felder keimabtötende Wirkung entfalten.

Es ist ebenso bekannt, UV-Strahlung in der Medizin oder in der Hygiene einzusetzen, um beispielsweise Wasser, Gase oder Oberflächen zu desinfizieren. So wird in der Trinkwasseraufbereitung seit langem UV-Strahlung zur Reduzierung der Anzahl von fakultativ krankheitserregenden Mikroorganismen im Wasser eingesetzt. Dabei wird vorzugsweise UV-C-Strahlung im Wellenlängenbereich zwischen 200 nm und 280 nm eingesetzt. Der Einsatz elektromagnetischer Strahlung mit unterschiedlichen Wellenlängen sollte die unterschiedliche Absorption der verschiedenen Proteine, den in Mikroorganismen, Geweben oder Zellen enthaltenden Amino-/Nukleinsäuren (z.B. DNA oder RNA) sowie Peptidbindungen zwischen den einzelnen Säuren berücksichtigen. So absorbiert DNA/RNA elektromagnetische Strahlung innerhalb des Wellenlängenbereichs zwischen 200 nm und 300 nm gut und zwischen 250 nm und 280 nm besonders gut, so dass diese Strahlung zur Inaktivierung von DNA/RNA besonders geeignet ist. Es können also krankheitserregende Mikroorganismen (Viren, Bakterien, Hefen, Schimmelpilze u.a.) mit einer solchen Bestrahlung inaktiviert werden. Je nach Dauer und Intensität der Bestrahlung kann die Struktur von DNA bzw. RNA zerstört werden. Somit werden stoffwechselaktive Zellen inaktiviert und/oder deren Vermehrungsvermögen kann beseitigt werden. Vorteilhaft bei der Bestrahlung mit UV-Strahlung ist, dass die Mikroorganismen keine Resistenz dagegen entwickeln können. Diese physikalischen Methoden erfordern allerdings spezielle Apparaturen und müssen in der Regel von geschultem Personal regelmäßig wiederholt werden, was einen breiten Einsatz dieser Methoden erschwert.

Des Weiteren ist es neben einer direkten Bestrahlung mit elektromagnetischer Strahlung aus dem Wellenlängenbereich der UV-Strahlung auch bekannt, den Effekt der so genannten Up-Conversion auszunutzen. Dabei werden Leuchtstoffpartikel eingesetzt, mit denen elektromagnetische Strahlung mit Wellenlängen oberhalb des UV-Strahlung, insbesondere sichtbares Licht oder Infrarotstrahlung, in elektromagnetische Strahlung mit geringerer Wellenlänge umgewandelt werden kann, so dass die Emission von in gewünschter Wellenlänge wirkender Strahlung von den einzelnen Leuchtstoffpartikeln erreicht werden kann.

DE 10 2015 102 427 betrifft einen elektromagnetische Strahlung im Wellenlängenbereich des UV-Lichts emittierenden Körper. Bei dem Körper sind in einem oberflächennahen Bereich innerhalb des Werkstoffs, aus dem der Körper gebildet ist oder einer Beschichtung auf dem Körper, Leuchtstoffpartikel eingebettet. Hierbei wird nur allgemein angegeben, dass die Leuchtstoffpartikel einer auf dem Werkstoff auszubildenden Beschichtung direkt bei der Verarbeitung zugegeben werden, dabei sollte der jeweilige Werkstoff eine geeignete Konsistenz bzw. Viskosität aufweisen. Hinsichtlich geeigneter Polymere und Additive schweigt DE 10 2015 102 427.

US 2009/0130169 A1 bzw. WO 2009/064845 A2 beschreibt Leuchtstoffe, die in Polyvinylchloride, Acrylbutadiene, Polyolefine, Polycarbonate, Polystyrole oder Nylon eingebracht werden können, welche durch die Up-Conversion Eigenschaft der Leuchtstoffe pathogene Mikroorganismen abtöten. Es handelt sich hierbei um Leuchtstoffe, die bei einer Temperatur von 1800 - 2900 °C hergestellt werden. Die US 2009/0130169 A1 bzw. WO 2009/064845 A2 offenbart zwar eine Zusammensetzung enthaltend besagter Leuchtstoffe mit behaupteter antimikrobieller Wirkung, zeigt jedoch weder einen Nachweis der Up-Conversion Eigenschaft noch mikrobiologischer Untersuchungen. Das darin offenbarte Verfahren führt zu keinem Leuchtstoff, der eine Up-Conversion Eigenschaft aufweist, sondern zu einem amorphen und glasartigen Produkt.

Darüber hinaus schweigt die US 2009/0130169 A1 bzw. WO 2009/064845 A2 über die Verträglichkeit der Komponente in der Beschichtungszusammensetzung oder die Eigenschaften der Beschichtungsoberflächen, wie etwa die Lackoberflächen. Das Erscheinungsbild von Beschichtungsoberflächen spielen jedoch beim Anwender eine besondere Rolle.

Die Anforderungen an Lacke und Farben sind vielfältig. Grundsätzlich haben Lack- bzw. Farbbeschichtungen zwei Aufgaben bzw. Funktionen, die schützende und die dekorative Funktion. Sollten im Weiteren nur der Begriff "Lackbeschichtung" aufgeführt sein, so sind beide Arten der Beschichtung gemeint. Sie verschönern, schützen und bewahren Materialien wie Holz, Metall oder Kunststoff. Demnach werden auf der einen Seite brillante und glatte Lackschichten gefordert, auf der anderen Seite eine geschlossene Lackschicht zur Sicherstellung der chemischen und mechanischen Beständigkeit, eine gewisse Gleitfähigkeit der Lacke oder eine besondere Haptik.

Im Gegensatz zu der WO 2009/064845 A2 konnte die Patentanmeldung PCT/EP2020/077798 Leuchtstoffe und deren Herstellung offenbaren, die eine Up-Conversion aufweisen. Solche Leuchtstoffe können bei Bestrahlung mit elektromagnetischer Strahlung mit geringerer Energie und höherer Wellenlänge im Bereich von 2000 nm bis 400 nm, insbesondere im Bereich von 800 nm bis 400 nm, elektromagnetische Strahlung mit höherer Energie bzw. kürzerer Wellenlänge im Bereich von 400 nm bis 100 nm, bevorzugt im Bereich von 300 nm bis 200 nm emittieren, so dass sie geeignet sind, als anti-mikrobielle Leuchtstoffe in Lackbeschichtungen eingesetzt zu werden.

So beschreibt die EP 3 929 254 eine Zusammensetzung enthalten mindestens ein filmbildendes Polymer, mindestens einen Up-Conversion Leuchtstoff gemäß der Lehre der PCT/EP2020/077798, optional mindestens ein Additiv und optional mindestens einen Härter. Es konnte gezeigt werden, dass Lackbeschichtungen enthaltend dieser Leuchtstoffe antimikrobiell wirken und ohne dass die übrigen Eigenschaften, insbesondere die Lagerstabilität, signifikant beeinträchtigt werden.

Es wurde jedoch auch festgestellt, dass die Leuchtstoffe, hergestellt nach einem Verfahren gemäß PCT/EP2020/077798, eine inhomogene Partikelgrößenverteilung aufweisen, was bei deren Einarbeitung in einer Lackmatrix eine besondere Herausforderung darstellt. Auch wenn die Lehre der EP 3929254 zu anti-mikrobiellen wirkenden Lackbeschichtungen führt, so wäre es wünschenswert, wenn die Intensität der Emission der Leuchtstoffe erhöht werden könnte.

Aus der noch nicht offengelegten Europäischen Patentanmeldung EP 21167984.0 wurde vorgeschlagen, dass man zur Herstellung von Beschichtungen mit anti-mikrobieller Eigenschaft enthaltend

- mindestens ein filmbildendes Polymer,
- optional mindestens ein Additiv,
- optional mindestens einen Härter,
- mindestens einen Up-Conversion Leuchtstoff mit

höchstens 3,5 Gew.-% Flussmittel, bezogen auf die Gesamtmenge der Edukte, einsetzt. Alle vorgenannten Veröffentlichungen und die noch nicht offengelegte Europäische Patentanmeldung EP 21167984.0 beschreiben zwar ein Verfahren zur Herstellung dieser Up-Conversion Leuchtstoffe; jedoch wurden diese Verfahren lediglich im Labormaßstab durchgeführt. Hierbei wurden Achatreibschalen und Muffelofen verwendet. Die Dimension derartiger Equipments ist naturbedingt begrenzt. Für die großtechnische Herstellung der Up-Conversion Leuchtstoffe können diese Verfahren daher nicht optimal eingesetzt werden. Die Verfahrensführung ist unpraktisch, zeit- und kostenintensiv. Es wurde zudem festgestellt, dass die nach diesen Verfahren in höheren Mengen hergestellte Up-Conversion Leuchtstoffe keine Reproduzierbarkeit aufwiesen. Entweder zeigte das Material keine ausreichende Up-Conversion oder die antimikrobielle Wirkung war unzureichend.

Der Erfindung liegt daher die Aufgabe zu Grunde, ein optimiertes Verfahren zur Herstellung von Up-Conversion Leuchtstoffen anzugeben.

Zur Lösung dieser Aufgabe wird ein Verfahren zur Herstellung eines Up-Conversion Leuchtstoffes der allgemeinen Formel (I)

$$A_{1-x-y-z}B^*_{y}B_2SiO_4:Ln^1_{x},Ln^2_{z}, \qquad\qquad I$$

mit

x = 0,0001 - 0,0500;

z = 0,0000 oder z = 0,0001 bis 0,3000 mit der Maßgabe, dass gilt: y = x + z;

A ausgewählt aus der Gruppe bestehend aus Mg, Ca, Sr und Ba;

B ausgewählt aus der Gruppe bestehend aus Li, Na, K, Rb und Cs;

B* ausgewählt aus der Gruppe bestehend aus Li, Na und K, wobei B gleich B* oder B ungleich B* ist, bevorzugt B und B* sind ungleich;

$Ln^1$ ausgewählt aus der Gruppe bestehend aus Praseodym (Pr), Erbium (Er) und Neodym (Nd);

$Ln^2$ ausgewählt aus Gadolinium (Gd),

umfassend folgende Schritte:

- Herstellung einer Mischung mit:

  i) mindestens einem Lanthanoidsalz, ausgewählt aus Lanthanoidnitraten, Lanthanoidcarbonaten, einem Lanthanoidcarboxylat, bevorzugt Lanthanoidacetate, einem Lanthanoidsulphat, und/oder einem Lanthanoidoxid, bevorzugt $Pr_6O_{11}$ und/oder $Gd_2O_3$, wobei das Lanthanoidion im Lanthanoidoxid oder Lanthanoidsalz ausgewählt ist aus Praseodym, Gadolinium, Erbium, Neodym und für die Co-Dotierung vorzugsweise mindestens zwei davon,
  ii) Bereitstellung eines Silikats, bevorzugt eines Silikatsalzes, besonders bevorzugt eines Alkalimetallsalzes des Silikats, oder eines Siliziumdioxids,
  iii) Bereitstellung mindestens eines Erdalkalimetallsalzes und mindestens eines Alkalimetallsalzes, bevorzugt eines Alkalimetallsilikats oder eines Alkalimetallcarbonats, ausgewählt aus einem Lithiumsalz oder einer Lithiumverbindung und optional ausgewählt aus einem Natriumsalz und Kaliumsalz, vorzugsweise das Salz des Lithiumsalzes, bevorzugt ein Lithiumsilikat, besonders bevorzugt ein Lithiumcarbonat, ein Calciumcarbonat und ein Natriumcarbonat, und optional
  iv) mindestens einem Flussmittel, ausgewählt aus der Gruppe der Ammoniumhalogenide, vorzugsweise Ammoniumchlorid, Alkalimetallhalogenide, vorzugsweise Natriumchlorid, Natriumfluorid, Natriumbromid, Lithiumfluorid oder Lithiumchlorid, Erdalkalimetallhalogenide, vorzugsweise Calciumchlorid oder Calciumfluorid, und Lanthanoidhalogenide, vorzugsweise Praseodymfluorid oder Praseodymchlorid,

- Einbringung der Mischung in einem Reaktionsraum einer thermischen Vorrichtung,

- Aufheizung der Mischung bis zur Erreichung einer thermischen Behandlungstemperatur von 600 °C bis < 1000 °C, bevorzugt von 650 °C bis 900 °C mit einer Aufheizrampe von 10 °C/h - 400 °C/h, bevorzugt 50 °C/h °C - 350 °C/h, besonders bevorzugt 80 °C/h - 300 °C/h,

- Thermische Behandlung der aufgeheizten Mischung bei einer Temperatur von 600 °C bis < 1000 °C, bevorzugt bei 650 °C bis 900 °C, wobei die Verweilzeit mindestens 0,02 h beträgt,

- Abkühlung des thermisch behandelten Materials bis Raumtemperatur unter Einhaltung einer Abkühlrampe von 10 °C/h - 400 °C/h, bevorzugt 50 °C/h - 350 °C/h, besonders bevorzugt 80 °C/h - 300 °C/h,

- Erhalt eines silikatbasierten Lanthanoid-Ion dotierten Leuchtstoffes gemäß Formel (I),

vorgeschlagen.

Unter der Begrifflichkeit "thermische Behandlung" wird hierbei die Kalzinierung, das Vorkalzinieren, Tempern oder die thermische Reduzierung verstanden.

Mit dem erfindungsgemäßen Verfahren ist es nun überraschend möglich, in reproduzierbaren Mengen Up-Conversion Leuchtstoffe herzustellen.

Vorteilhaft bei dem erfindungsgemäßen Verfahren ist die Schonung der Vorrichtungsmaterialien aufgrund der Aufheiz- und Abkühlrampen. Eingesetzte Vorrichtungen erfahren somit keinen plötzlichen Temperaturstress, was zur Materialermüdung führen könnte.

Vorzugsweise beträgt die Verweilzeit 0,5 h, bevorzugt 3 h, besonders bevorzugt 6 h oder 12 h, jedoch höchstens 48 h. Dem Fachmann kann entsprechend aus Gründen der Wirtschaftlichkeit die Verweilzeit innerhalb dieser Zeiten variieren.

Vorzugsweise wird die thermische Behandlungstemperatur während der Verweilzeit konstant gehalten.

Die Mischung kann vorzugsweise mittels diskontinuierlicher Mischer, wie zum Beispiel Rhönradmischer, Fassrollmischer, Doppelkonusmischer, Containermischer, Trommelmischer, oder kontinuierlichen Mischern, wie zum Beispiel Paddelmischer, Extruder, Durchlaufmischer, hergestellt werden. Andere Mischer sind ebenso vorstellbar.

Bevorzugt wird die Mischung ohne Lösungsmittel hergestellt.

Vorzugsweise wird die Mischung vor der Einbringung in den Reaktionsraum vermahlen und/oder kompaktiert.

Die Gleichmäßigkeit der Vermischung vor Einbringung in den Reaktionsraum kann eine große Rolle beim Erreichen der erforderlichen Produktqualität spielen. Um diese Gleichmäßigkeit zu erreichen, kann man vorzugsweise durch Vermahlung die Partikelgrößenverteilung der Komponenten i, ii, iii, optional iv vereinheitlichen. Die Vermahlung kann mittels Nassvermahlung oder Trockenvermahlung erfolgen. Die Trockenvermahlung kann z. B. in Kugelmühlen, Rührwerkskugelmühlen, Stiftmühle, Prallmühlen, Sichtermühlen, Spiralstrahlmühlen, Fließbettstrahlmühlen oder Dampfstrahlmühlen durchgeführt werden. Die Nassvermahlung kann z. B. in Rotor-Stator Dispergiersysteme/Dispergierer, Rührwerkskugelmühlen oder Kolloidmühlen durchgeführt werden.

Eine anschließende Kompaktierung/Granulierung hat den Vorteil, das erforderliche Arbeitsvolumen des Ofens zu reduzieren, Staubbildung zu verhindern bzw. zu minimieren und/oder eine Entmischung der Komponenten entgegenzuwirken. Eine Kompaktierung kann trocken oder nass erfolgen. Durch die Kompaktierung kann verdichtetes Pulver bis hin zu Granulat erstellt werden. Zum Kompaktieren können Walzenpressen/-kompaktierer oder ähnliche Technologien eingesetzt werden.

Vorzugsweise werden mindestens 0,01 - 10,0 Gew.-%, bevorzugt mindestens 0,5 - 6,0 Gew.-% und besonders bevorzugt 1,5 - 4,0 Gew.-%, Flussmittel, bezogen auf die Gesamtmenge der Edukte eingesetzt.

Bevorzugt wird die thermische Behandlung diskontinuierlich oder kontinuierlich durchgeführt. Abhängig von der Geometrie der thermischen Vorrichtungen ist eine solche Verfahrensführung sinnvoll, die der Fachmann entsprechend beurteilen und heranziehen kann.

Bevorzugt handelt es sich bei der thermischen Vorrichtung um diskontinuierliche Öfen, vorzugsweise um Muffelöfen, Umluftöfen, Kammeröfen, Herdwagenöfen oder Wirbelschichtöfen bzw. -reaktor, oder um kontinuierliche Öfen, vorzugsweise um Durchschuböfen, Durchlauföfen, Drehrohröfen, Trommelöfen, Tunnelöfen, Vertikalöfen oder Paternosteröfen.

Diese Öfen können vorzugsweise gasdicht und/oder gasdurchlässig konstruiert sein, elektrisch oder mit Erdgas betrieben sein.

Die Ofenkonstruktion muss vorzugsweise gewährleisten, dass die Durchführung des erfindungsgemäßen Verfahrens, welche im Wesentlichen aus Aufheizung, thermische Behandlung und Abkühlung besteht, unter Einhaltung der jeweiligen Rampen und Verweilzeit ermöglicht.

Bei der Verwendung von Drehrohröfen oder Trommelöfen wird vorzugsweise das Aufheizen des Arbeitsrohrs bzw. der Trommel zunächst ohne Mischung durchgeführt. Erreicht das Arbeitsrohr die erforderliche Temperatur, wird die Mischung eingeleitet. Aufgrund seines Aufbaus können dessen Verweilzeiten kurz sein, entsprechend können hohe Durchsätze generiert werden. Auf den erfindungsgemäßen Abkühlungsschritt mit der Abkühlrampe kann verzichtet werden, da das Produkt sofort in einem Behälter abgeleitet wird.

Bevorzugt wird die thermische Behandlung im Drehrohrofen in Kombination mit einem weiteren diskontinuierlichen oder kontinuierlichen Ofen, wie z. B. Tunnelofen, Durchlaufofen, Schubplattenofen, durchgeführt.

Vorzugsweise wird die thermische Behandlung vollständig oder teilweise unter Luft-Atmosphäre durchgeführt.

Sollte das erfindungsgemäße Verfahren in einer reduzierenden Atmosphäre durchgeführt werden, so soll die thermische Vorrichtung vorzugsweise gasdicht sein.

Bei der Durchführung unter Luft-Atmosphäre wäre die Gasdurchlässigkeit der thermischen Vorrichtung von Vorteil.

Es ist vorstellbar, das erfindungsgemäße Verfahren vorzugsweise unter Luft-Atmosphäre und reduzierender Atmosphäre durchzuführen. Hierfür sollte die thermische Vorrichtung über eine solche kombinierte Einheit verfügen.

Bevorzugt weist die thermische Vorrichtung im Reaktionsraum eine oder mehrere Behälter auf, die aus Keramiken gefertigt und/ oder mit keramischen Füllstoffen und/oder keramischen Beschichtungen ausgestattet sind. Behälter aus anderen Materialien, die mit den Edukten und/oder Produkt keine Reaktionen eingehen, können ebenfalls eingesetzt werden. Diese Behälter können statisch oder beweglich im Reaktionsraum montiert (z.B.: auf einem Paternosterlift, auf einen Zugwagen, auf einem Durchlaufband, etc.) sein

Bei einem Einsatz von mehr als 1,0 Gew.-% Lanthanoid-Ionen, bezogen auf Gesamtmenge der Edukte, wird vorzugsweise vor der Abkühlung des thermisch behandelten Materials eine weitere thermische Behandlung bei einer Temperatur von 600 °C bis < 1000 °C, bevorzugt bei 650 °C bis 900 °C, wobei die Verweilzeit mindestens 0,02 h, vorzugsweise mindestens 0,5 h, besonders bevorzugt mindestens 3 h beträgt, unter reduzierender Atmosphäre durchgeführt.

Vorzugsweise handelt es sich bei der reduzierenden Atmosphäre um CO-haltigen Atmosphären oder um ein Formiergas, vorzugweise um Argon-Wasserstoff-Gemische oder Stickstoff-Wasserstoff-Gemische (97/3 und 95/5).

Für das erfindungsgemäße Verfahren handelt es sich vorzugsweise bei den Lanthanoiden um Praseodym, bei den Alkalimetallen um Natrium oder Lithium und bei den Erdalkalimetallen um Calcium.

Bevorzugte Siliziumdioxide können die Produkte mit dem Markennamen Aerosil® 300, 200, OX50, 200V und 300V der Fa. Evonik verwendet werden.

Bevorzugt ist der nach dem erfindungsgemäßen Verfahren hergestellte Leuchtstoff mit Praseodym dotiert.

Vorzugsweise wird der erkaltete silikatbasierte Lanthanoid-Ion dotierte Leuchtstoff vermahlt.

Die nach dem erfindungsgemäßen Verfahren hergestellten Leuchtstoffe können durch eine Nachbehandlung beschichtet werden. Beschichtete und unbeschichtete Up-Conversion Leuchtstoffe können in Beschichtungsstoffe eingesetzt werden, die antimikrobielle Wirkung aufweisen.

Nachfolgend werden Beispiele aufgeführt, die dem Fachmann allein zur Erläuterung dieser Erfindung dienen und stellen keinerlei Beschränkung des beanspruchten Gegenstandes dar.

**Methoden**

**Partikelgrößenverteilung** nach ISO 13320:2020 und USP 429, mit einem Gerät der Fa. Horiba, LA-950 Laser Particle Size Analyzer

**Qualitative Elementanalyse** mittels EDX mit Tabeltop 4000Plus von Hitachi, BSE-Detektor 15 kV, 1000fache Vergrößerung

**Pulver-XRD:** Die Röntgenpulverdiffraktogramme der Proben wurden mit einem Bruker D2 Phaser Pulver Diffraktometer, das in der Bragg-Brentano Geometrie arbeitet, aufgenommen, wobei Cu-$K_\alpha$ Strahlung und ein Linescan CCD Detektor verwendet wurde. Die Integrationszeit betrug 20 s, während die Schrittweite 0,017° 2θ betrug.

**Die Emissionsspektren** wurden mit Hilfe eines Edinburgh Instruments FLS920 Spektrometers, das mit einem 488 nm continuous-wave OBIS Laser der Firma Coherent sowie einem Peltier gekühlten (-20 °C) single-photon counting photomultiplier der Firma Hamamatsu (R2658P) ausgerüstet ist. Kantenfilters wurden zur Unterdrückung der Reflexe zweiter und höherer Ordnung, welche durch die Monochromatoren verursacht werden, verwendet.

**BET Oberflächen Messungen** nach ISO 9277:2010, DIN 66131 mit dem Gerät der Firma Quantachrome, Nova 2000e.

**Der Grad der Kristallinität** (engl. Degree of Crystallinity) gewährt eine Aussage über das Verhältnis der kristallinen zu amorphen Fläche aller Komponenten in einem Pulver Diffraktogramm. Der Grad der Kristallinität wird berechnet aus der Gesamtfläche unter den kristallinen und amorphen Anteilen:

$$DOC = \frac{Kristalline\ Fl\ddot{a}che}{Kristalline\ Fl\ddot{a}che + Amorphe\ Fl\ddot{a}che}$$

**Schütt und Stampfdichtemessung** nach DIN EN ISO 787-11:1995-10.

**Beispiel Herstellung eines Leuchtstoffs $(Ca_{0,98}Pr_{0,01}Na_{0,01})Li_2SiO_4$ mit 1,5 Gew.-. % $CaF_2$ als Flussmittel im 6 kg Maßstab gemäß erfindungsgemäßem Verfahren**

2,47 kg $CaCO_3$, 1,86 kg $Li_2CO_3$, 1,51 kg $SiO_2$, 13,36 g $Na_2CO_3$, 42,95 g $Pr_6O_{11}$, und 92,62 g $CaF_2$ wurden in einem Rhönradmischer vermischt und mittels einer Stiftmühle vermahlen. Anschließend wurde die vermahlte Mischung durch den Einsatz eines Walzenkompators kompaktiert. Die vermahlte und kompaktierte Mischung wurde auf drei 3,2L-Keramikkästen verteilt. Dabei wurde jeder Kasten mit 2 kg der Mischung befüllt. Anschließend wurden diese Kästen in einen Kammerofen überführt. Bei einer Aufheizrampe von 90 °C/h wurden die befüllten Kästen (Ansatz) auf eine Temperatur von 850 °C erhitzt. Bei Erreichung der thermischen Behandlungstemperatur von 850 °C wird der Ansatz für 6h in Luft kalziniert. Anschließend wird der Leuchtstoff unter Einhaltung einer Abkühlrampe von 90 °C/h auf Raumtemperatur abgekühlt. Der abgekühlte, grobgutartige Leuchtstoff konnte aus den Kästen entnommen werden und mittels eines Backenbrechers vorzerkleinert. Der vorzerkleinerte Leuchtstoff wurde mit einer Luftstrahlmühle auf einer Partikelgrößenverteilung von

$D_{10}$: 2,6 μm
$D_{50}$: 3,6 μm

$D_{90}$: 6 $\mu$m

vermahlen.

Bei einem Ansatz von 6 kg Edukte konnte eine Ausbeute von 4,8 kg Leuchtstoffe hergestellt werden.

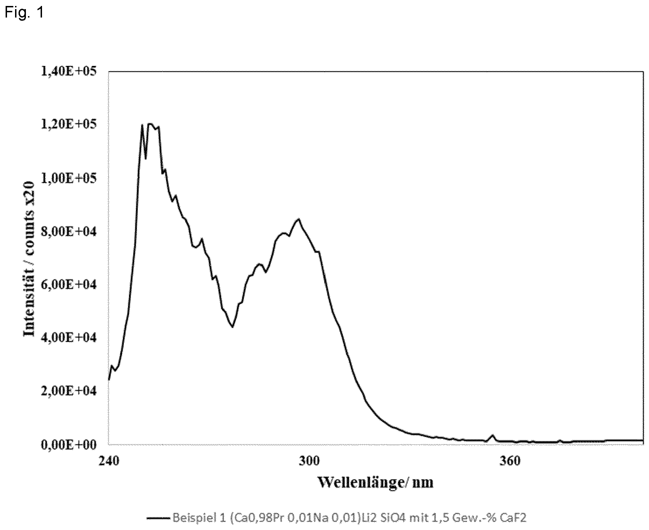

Fig. 1 zeigt ein Emissionsspektrum des nach dem erfindungsgemäßen Verfahren hergestellten Leuchtstoffs.

Der nach dem erfindungsgemäßen Verfahren hergestellte Leuchtstoff zeigte eine Up-Conversion Eigenschaft im Emissionsspektrum im UV-C Bereich und eine anti-mikrobielle Wirkung auf.

**Theoretisches Vergleichsbeispiel 1 (VG 1) Herstellung eines Leuchtstoffs gemäß der noch nicht offengelegten Europäischen Patentanmeldung EP 21167984.0 (Ca$_{0,98}$Pr$_{0,01}$Na$_{0,01}$)Li$_2$SiO$_4$ mit 1,5 Gew.- % CaF$_2$ als Flussmittel**

Bei einem Ansatz von 6 kg Edukte müsste theoretisch 600 Tiegel vorbereitet werden und 200 Muffelöfen vorhanden sein, um das Verfahren durchführen zu können. Für diese Berechnung wurde die Aufnahmekapazität eines Muffelofens zugrunde gelegt. In einem Muffelofen passen theoretisch drei 60ml-Keramiktiegeln, welche jeweils 10 g Eduktmischung aufnehmen könnten. Angesicht dieser Berechnung zeigt, dass das aus dem Stand der Technik bekannte Verfahren wirtschaftlich nicht zu vertreten wäre.

**Vergleichsbeispiel 2 (VG2): Herstellung eines Leuchtstoffs (Ca$_{0,98}$Pr$_{0,01}$Na$_{0,01}$)Li$_2$SiO$_4$ mit 1,5 Gew.- % CaF$_2$ als Flussmittel im 6 kg Maßstab ohne Aufheizrampe und ohne Abkühlrampe**

Analog zu oben beschriebenem Beispiel wurde die Edukte vermischt und auf die 3,2L Keramikkästen verteilt. Jedoch wurde auf die Aufheizrampe verzichtet. Es konnte beobachtet werden, dass alle Keramikkästen zerbrachen. Nach der thermischen Behandlung wurde der Leuchtstoff ohne Einhaltung der Abkühlrampe auf Raumtemperatur abgekühlt. Beschädigte Keramikkästen sind unwiederbringlich zerbrochen. Es konnte eine Ausbeute von 0 kg Leuchtstoff gewonnen werden. Die mit Keramikmaterial verunreinigten Leuchtstoffe wurden verworfen.

**Patentansprüche**

1. Verfahren zur Herstellung eines Up-Conversion Leuchtstoffes der allgemeinen Formel (I)

$$A_{1-x-y-z}B^*{}_yB_2SiO_4{:}Ln^1{}_x,Ln^2{}_z, \qquad I$$

mit

x = 0,0001 - 0,0500;
z = 0,0000 oder z = 0,0001 bis 0,3000 mit der Maßgabe, dass gilt: y = x + z;
A ausgewählt aus der Gruppe bestehend aus Mg, Ca, Sr und Ba;
B ausgewählt aus der Gruppe bestehend aus Li, Na, K, Rb und Cs;
B* ausgewählt aus der Gruppe bestehend aus Li, Na und K, wobei B gleich B* oder B ungleich B* ist, bevorzugt B und B* sind ungleich;
Ln$^1$ ausgewählt aus der Gruppe bestehend aus Praseodym (Pr), Erbium (Er) und Neodym (Nd);
Ln$^2$ ausgewählt aus Gadolinium (Gd),

umfassend folgende Schritte:

- Herstellung einer Mischung mit:

i) mindestens einem Lanthanoidsalz, ausgewählt aus Lanthanoidnitraten, Lanthanoidcarbonaten, einem Lanthanoidcarboxylat, bevorzugt Lanthanoidacetate, einem Lanthanoidsulphat, und/oder einem Lantha-noidoxid, bevorzugt Pr$_6$O$_{11}$ und/oder Gd$_2$O$_3$, wobei das Lanthanoidion im Lanthanoidoxid oder Lanthanoidsalz ausgewählt ist aus Praseodym, Gadolinium, Erbium, Neodym und für die Co-Dotierung vorzugsweise mindestens zwei davon,
ii) Bereitstellung eines Silikats, bevorzugt eines Silikatsalzes, besonders bevorzugt eines Alkalimetallsalzes des Silikats, oder eines Siliziumdioxids,
iii) Bereitstellung mindestens eines Erdalkalimetallsalzes und mindestens eines Alkalimetallsalzes, bevorzugt eines Alkalimetallsilikats oder eines Alkalimetallcarbonats, ausgewählt aus einem Lithiumsalz oder einer Lithiumverbindung und optional ausgewählt aus einem Natriumsalz und Kaliumsalz, vorzugsweise das Salz des Lithiumsalzes, bevorzugt ein Lithiumsilikat, besonders bevorzugt ein Lithiumcarbonat, ein Calciumcarbonat und ein Natriumcarbonat, und optional

iv) mindestens einem Flussmittel, ausgewählt aus der Gruppe der Ammoniumhalogenide, vorzugsweise Ammoniumchlorid, Alkalimetallhalogenide, vorzugsweise Natriumchlorid, Natriumfluorid, Natriumbromid, Lithiumfluorid oder Lithiumchlorid, Erdalkalimetallhalogenide, vorzugsweise Calciumchlorid oder Calciumfluorid, und Lanthanoidhalogenide, vorzugsweise Praseodymfluorid oder Praseodymchlorid,

- Einbringung der Mischung in einem Reaktionsraum einer thermischen Vorrichtung,
- Aufheizung der Mischung bis zur Erreichung einer thermischen Behandlungstemperatur von 600 °C bis < 1000 °C, bevorzugt von 650 °C bis 900 °C mit einer Aufheizrampe von 10 °C/h - 400 °C/h, bevorzugt 50 °C/h - 350°C/h, besonders bevorzugt 80 °C/h - 300 °C/h,
- Thermische Behandlung der aufgeheizten Mischung bei einer Temperatur von 600°C bis < 1000 °C, bevorzugt bei 650°C bis 900°C, wobei die Verweilzeit mindestens 0,02 h beträgt,
- Abkühlung des thermisch behandelten Materials bis Raumtemperatur unter Einhaltung einer Abkühlrampe von 10 °C/h - 400°C/h, bevorzugt 50 °C/h - 350 °C/h, besonders bevorzugt 80 °C/h - 300 °C/h,
- Erhalt eines silikatbasierten Lanthanoid-Ion dotierten Leuchtstoffes gemäß Formel (I).

2. Verfahren nach Anspruch 1, **dadurch gekennzeichnet, dass** die Mischung ohne Lösungsmittel hergestellt wird.

3. Verfahren nach einem der vorgenannten Ansprüche, **dadurch gekennzeichnet, dass** die Mischung vor der Einbringung in den Reaktionsraum vermahlen und/oder kompaktiert wird.

4. Verfahren nach einem der vorgenannten Ansprüche, **dadurch gekennzeichnet, dass** mindestens 0,01 - 10,0 Gew.-%, bevorzugt mindestens 0,5 - 6,0 Gew.-% und besonders bevorzugt 1,5 - 4,0 Gew.-%, Flussmittel, bezogen auf die Gesamtmenge der Edukte eingesetzt werden.

5. Verfahren nach einem der vorgenannten Ansprüche, **dadurch gekennzeichnet, dass** die thermische Behandlung diskontinuierlich oder kontinuierlich durchgeführt wird.

6. Verfahren nach einem der vorgenannten Ansprüche, **dadurch gekennzeichnet, dass** es sich bei der thermischen Vorrichtung um diskontinuierliche Öfen, vorzugsweise um Muffelöfen, Umluftöfen, Kammeröfen, Herdwagenöfen oder Wirbelschichtöfen, oder um kontinuierliche Öfen, vorzugsweise um Durchschuböfen, Durchlauföfen, Drehrohröfen, Trommelofen, Tunnelofen, Vertikalöfen oder Paternosteröfen, handelt.

7. Verfahren nach einem der vorgenannten Ansprüche, **dadurch gekennzeichnet, dass** bei der Verwendung von Drehrohröfen oder Trommelöfen das Aufheizen des Arbeitsrohrs bzw. Trommel erforderlich ist, bevor die Mischung eingebracht wird.

8. Verfahren nach einem der vorgenannten Ansprüche, **dadurch gekennzeichnet, dass** die thermische Behandlung unter Luftatmosphäre durchgeführt wird.

9. Verfahren nach einem der vorgenannten Ansprüche, **dadurch gekennzeichnet, dass** bei einem Einsatz von mehr als 1,0 Gew.-% Lanthanoid-Ionen, bezogen auf Gesamtmenge der Edukte, vor der Abkühlung des thermisch behandelten Materials eine weitere thermische Behandlung bei einer Temperatur von 600 °C bis < 1000 °C, bevorzugt bei 650 °C bis 900 °C, wobei die Verweilzeit mindestens 0,02 h, vorzugsweise mindestens 0,5 h, besonders bevorzugt mindestens 3 h beträgt, unter reduzierender Atmosphäre durchgeführt wird.

10. Verfahren nach Anspruch 9, **dadurch gekennzeichnet, dass** es sich bei der reduzierenden Atmosphäre um CO-haltigen Atmosphären oder um ein Formiergas, vorzugsweise um Argon-Wasserstoff-Gemische oder Stickstoff-Wasserstoff-Gemische (97/3 und 95/5), handelt.

11. Verfahren nach einem der vorgenannten Ansprüche, **dadurch gekennzeichnet, dass** es sich bei den Lanthanoiden um Praseodym handelt.

12. Verfahren nach einem der vorgenannten Ansprüche, **dadurch gekennzeichnet, dass** es sich bei den Alkalimetallen um Natrium oder Lithium handelt.

13. Verfahren nach einem der vorgenannten Ansprüche, **dadurch gekennzeichnet, dass** es sich bei den Erdalkalimetallen um Calcium handelt.

14. Verfahren nach einem der vorgenannten Ansprüche, **dadurch gekennzeichnet, dass** der Leuchtstoff mit Praseodym dotiert ist.

15. Verfahren nach einem der vorgenannten Ansprüche, **dadurch gekennzeichnet, dass** der erkalte silikatbasierte Lanthanoid-Ion dotierte Leuchtstoff vermahlen wird.

Fig. 1

Beispiel 1 (Ca0,98Pr 0,01Na 0,01)Li2 SiO4 mit 1,5 Gew.-% CaF2

**EP 4 245 826 A1**

Europäisches Patentamt

European Patent Office

Office européen des brevets

# EUROPÄISCHER RECHERCHENBERICHT

Nummer der Anmeldung

EP 23 16 1160

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2021/073915 A1 (EVONIK OPERATIONS GMBH [DE]) 22. April 2021 (2021-04-22) * Seite 13 – Seite 14 * * Anspruch 14; Beispiele * ----- | 1-15 | INV. C09K11/77 C01F17/32 |
| Y | EP 2 881 447 A1 (SUMITOMO METAL MINING CO [JP]; UNIV TOHOKU [JP]) 10. Juni 2015 (2015-06-10) * Absätze [0060] – [0063] * ----- | 1-15 | |
| Y | JP 2008 095091 A (MITSUBISHI CHEM CORP) 24. April 2008 (2008-04-24) * Absätze [0071] – [0078], [0087] * ----- | 1-15 | |
| Y | JIANG LINGLING ET AL: "Preparation and luminescence properties of yellow long-lasting phosphor Ca2ZnSi2O7:Eu2+, Dy3+", MATERIALS SCIENCE AND ENGINEERING: B, Bd. 178, Nr. 2, 9. November 2012 (2012-11-09), Seiten 123-126, XP028961114, ISSN: 0921-5107, DOI: 10.1016/J.MSEB.2012.10.022 * Abbildung 4 * ----- | 1-15 | RECHERCHIERTE SACHGEBIETE (IPC) C09K C01F |

Der vorliegende Recherchenbericht wurde für alle Patentansprüche erstellt

| Recherchenort | Abschlußdatum der Recherche | Prüfer |
|---|---|---|
| Den Haag | 10. Juli 2023 | Baldé, Kaisa |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

11

**ANHANG ZUM EUROPÄISCHEN RECHERCHENBERICHT
ÜBER DIE EUROPÄISCHE PATENTANMELDUNG NR.**

EP 23 16 1160

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-07-2023

| Im Recherchenbericht angeführtes Patentdokument | Datum der Veröffentlichung | Mitglied(er) der Patentfamilie | | Datum der Veröffentlichung |
|---|---|---|---|---|
| WO 2021073915 A1 | 22-04-2021 | CN | 114555756 A | 27-05-2022 |
| | | EP | 4045610 A1 | 24-08-2022 |
| | | JP | 2022551693 A | 13-12-2022 |
| | | TW | 202124668 A | 01-07-2021 |
| | | US | 2022403239 A1 | 22-12-2022 |
| | | WO | 2021073915 A1 | 22-04-2021 |
| EP 2881447 A1 | 10-06-2015 | EP | 2881447 A1 | 10-06-2015 |
| | | JP | 5578739 B2 | 27-08-2014 |
| | | JP | 2014043539 A | 13-03-2014 |
| | | TW | 201404868 A | 01-02-2014 |
| | | US | 2015203749 A1 | 23-07-2015 |
| | | WO | 2014021006 A1 | 06-02-2014 |
| JP 2008095091 A | 24-04-2008 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019197076 A
- DE 102015102427
- US 20090130169 A1
- WO 2009064845 A2

- EP 2020077798 W
- EP 3929254 A
- EP 21167984